# EUROPEAN PATENT APPLICATION

(11) **EP 3 240 090 A1**
(43) Date of publication of application: **01.11.2017**
(21) Application number: 14909111.8
(22) Date of filing: 26.12.2014
(51) Int. Cl.: H01M 10/0567, H01M 4/505, H01M 4/525, H01M 10/052

(54) **ELECTRICAL DEVICE**

(71) Applicant: Nissan Motor Co., Ltd., Kanagawa 220-8623 (JP)
(72) Inventor: FUJII, Takayuki, Atsugi-shi Kanagawa 243-0123 (JP); KITA, Yosuke, Atsugi-shi Kanagawa 243-0123 (JP)
(74) Representative: Hoefer & Partner Patentanwälte mbB
(86) International application number: PCT/JP2014/084678
(87) International publication number: WO 2016/103509

(57) **Abstract**

Provided is an electric device having excellent cycle durability.

There is provided an electric device including: a positive electrode which includes a positive electrode active material layer containing a lithium nickel-based composite oxide and a spinel crystal-type lithium manganese composite oxide; and an electrolyte which contains a compound having an S=O bond in a molecule, in which a content ratio of the lithium nickel-based composite oxide in the positive electrode active material layer is 50% by mass or more with respect to the total mass of the lithium nickel-based composite oxide and the spinel crystal-type lithium manganese composite oxide, and a concentration of the compound having an S=O bond in a molecule in the electrolyte is 0.4 to 2.0% by mass.

## Description

### TECHNICAL FIELD

The present invention relates to an electric device.

### BACKGROUND ART

Currently, an electric device such as a non-aqueous electrolyte secondary battery including a lithium ion secondary battery that is utilized for a mobile device such as a mobile phone is available as a commercial product. The electric device such as a non-aqueous electrolyte secondary battery generally has a constitution that a positive electrode having a positive electrode active material and the like coated on a current collector and a negative electrode having a negative electrode active material and the like coated on a current collector are connected to each other via an electrolyte layer in which a non-aqueous electrolyte solution or a non-electrolyte gel is held in a separator. The charge and discharge reactions of a battery occur as the ions such as lithium ions are absorbed into and desorbed from an electrode active material.

In recent years it has been desired to reduce the amount of carbon dioxide in order to cope with the global warming. Hence, the electric device such as a non-aqueous electrolyte secondary battery having a small environmental burden has been utilized not only in a mobile device but also in a power source device of electric vehicles such as a hybrid vehicle (HEV), an electric vehicle (EV), and a fuel cell vehicle.

As the non-aqueous electrolyte secondary battery for application to the electric vehicles, it is required to have a high output and a high capacity. As the positive electrode active material used in the positive electrode of a non-aqueous electrolyte secondary battery for an electric vehicle, for example, a lithium cobalt-based composite oxide that is a composite oxide of a layered crystal structure such as LiCoO₂ has already been widely put into practical use since it can provide a high voltage of a 4 V-class and has a high energy density. However, cobalt of a raw material thereof is lacking as a natural resource and is expensive so as to be anxious in terms of raw material supply when a possibility that the demand for cobalt is going to significantly increase in the future is taken into consideration. In addition, there is also a possibility that the raw material price of cobalt increases. Thus, a composite oxide containing cobalt at a lower content ratio is desired.

A spinel type lithium manganese composite oxide (LiMn₂O₄) is inexpensive and highly safe and functions as a 4 V-class positive electrode material in the composition with λ-MnO₂. The spinel type lithium manganese composite oxide has a three-dimensional host structure that is different from the layered crystal structure of LiCoO₂ and the like, and thus most of the theoretical capacity is usable so as to be expected to exhibit excellent cycle durability.

In practice, however, it is confirmed that a lithium ion secondary battery using a spinel type lithium manganese composite oxide as the positive electrode material has smaller volume energy density than that of LiCoO₂ and cannot avoid the deterioration in capacity that the capacity gradually decreases as charge and discharge are repeated. Thus, there is still a major problem for the practical application of the spinel type lithium manganese composite oxide due to small volume energy density and low cycle durability thereof.

As a technique for solving such problems of small capacity per volume and low cycle durability of the spinel type lithium manganese composite oxide, a technique using a mixture of a spinel type lithium manganese composite oxide and another composite oxide is proposed. For example, WO 2005/124898 A discloses a technique using a positive electrode active material layer in which a lithium-nickel-manganese-based composite oxide having a small compression breaking strength of the specific average particle diameter is further added to a lithium manganese-based composite oxide having a large compression breaking strength of the specific average particle diameter. Herein, it is disclosed that Li_{1.05}Mn_{1.97}Al_{0.03}O₂ or the like is used as the lithium-manganese-based composite oxide and Li_{1.05}Ni_{3/7}Co_{1/7}Mn_{3/7}O₂ or the like that is a lithium-nickel-manganese-cobalt composite oxide is used as the lithium-nickel-manganese-based composite oxide. With such a configuration, it is possible to provide a positive electrode active material powder for a lithium secondary battery which is excellent in capacity per mass and/or volume, cycle durability, large current discharge properties, and stability. In WO 2005/124898 A, it is assumed that this effect can be obtained by the cycle durability and the capacitive characteristics of the lithium-nickel-manganese-based composite oxide itself and the effect of suppressing Mn elution from the lithium manganese-based composite oxide caused by the lithium-nickel-manganese-based composite oxide.

### SUMMARY OF INVENTION

According to the studies of the present inventors, it is found that the cycle durability at several hundreds of cycles is not still sufficient even by the technique described in WO 2005/124898 A. In this regard, an object of the present invention is to provide an electric device having excellent cycle durability which is produced by using a positive electrode active material layer containing a lithium nickel-based composite oxide and a spinel type lithium manganese composite oxide.

The present inventors conducted intensive studies. As a result, they found that the above-described problems can be solved by using a positive electrode, which includes a positive electrode active material layer containing a lithium nickel-based composite oxide and a spinel type lithium manganese composite oxide at a predetermined ratio, and an electrolyte, which contains a predetermined additive at a predetermined concentration, in an electric device, and thus have been completed the present invention. That is, according to an aspect of the present invention, there is provided an electric device which includes: a positive electrode including a positive electrode active material layer containing a lithium nickel-based composite oxide and a spinel type lithium manganese composite oxide; and an electrolyte containing an additive having an S=O bond in a molecule. Further, the electric device is characterized in that a content ratio of the lithium nickel-based composite oxide is 50% by mass or more with respect to the total mass of the lithium nickel-based composite oxide and the spinel type lithium manganese composite oxide. Furthermore, the electric device is characterized in that the additive having an S=O bond in a molecule is contained in the electrolyte at a concentration of 0.4 to 2.0% by mass.

### BRIEF DESCRIPTION OF DRAWINGS

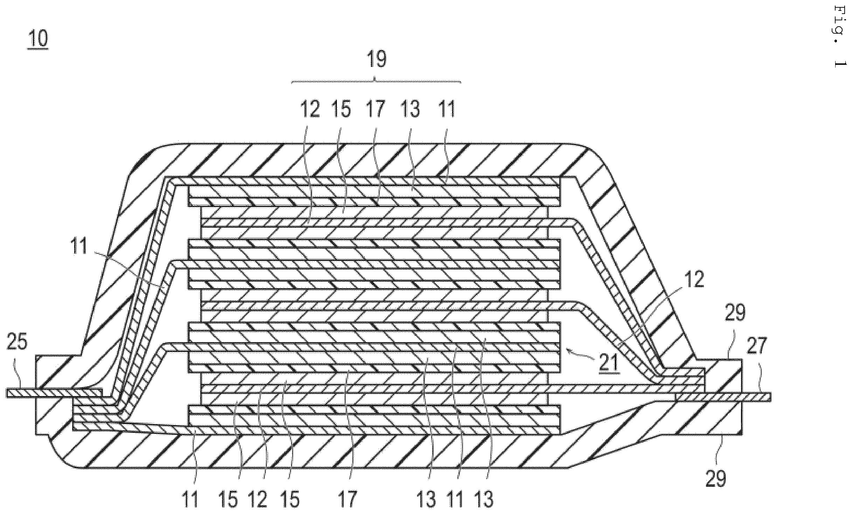

Fig. 1 is a cross-sectional view schematically illustrating the basic constitution of a non-aqueous electrolyte lithium ion secondary battery of an embodiment of the non-aqueous electrolyte lithium ion secondary battery, in which the non-aqueous electrolyte lithium ion secondary battery is a flat type (stack type) but not a bipolar type as an electric device of one embodiment according the present invention.

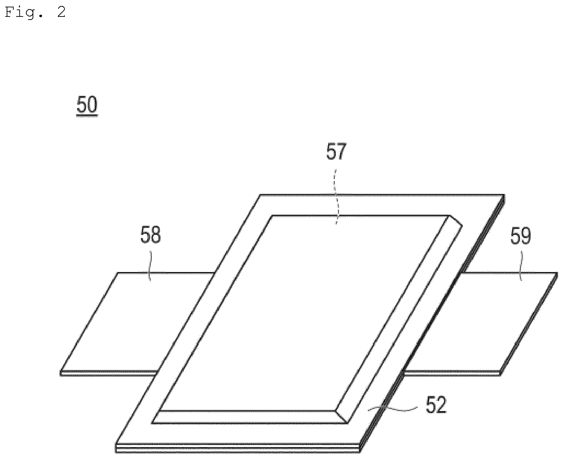

Fig. 2 is a perspective view illustrating the appearance of a flat lithium ion secondary battery as a representative embodiment of a secondary battery as an electric device of one embodiment according the present invention.

### DESCRIPTION OF EMBODIMENTS

According to an embodiment of the present invention, there is provided an electric device which includes: a positive electrode including a positive electrode active material layer containing a lithium nickel-based composite oxide and a spinel type lithium manganese composite oxide; and an electrolyte containing an additive having an S=O bond in a molecule, in which a content ratio of the lithium nickel-based composite oxide in the positive electrode active material layer is 50% by mass or more with respect to the total mass of the lithium nickel-based composite oxide and the spinel type lithium manganese composite oxide, and a concentration of the additive having an S=O bond in a molecule in the electrolyte is 0.4 to 2.0% by mass. According to the electric device related to the present embodiment, the additive having an S=O bond in a molecule forms an SEI film on a negative electrode to suppress a side reaction between a negative electrode active material on the negative electrode and the electrolyte. Thus, deterioration of the negative electrode is suppressed. In addition, the effect of suppressing Mn elution from the spinel type lithium manganese composite oxide of the additive having an S=O bond in a molecule suppresses deterioration of the negative electrode. Further, the composition of the positive electrode active material and the addition amount of the additive having an S=O bond in a molecule are adjusted to a predetermined range to suppress deterioration of the lithium nickel-based composite oxide by the additive having an S=O bond in a molecule. From these results, an electric device having excellent cycle durability can be provided.

Hereinafter, a non-aqueous electrolyte lithium ion secondary battery that is a type of non-aqueous electrolyte secondary battery will be mainly described as a preferred embodiment of the electric device, but it is not limited to the following embodiment. Furthermore, as described herein, "X to Y" representing a range means "X or more and Y or less". Incidentally, the same elements are given with the same symbols for the descriptions of the drawings, and overlapped descriptions are omitted. Further, note that dimensional ratios in the drawings are exaggerated for the sake of description, and are different from actual ratios in some cases.

Fig. 1 is a cross-sectional view schematically illustrating the basic constitution of a non-aqueous electrolyte lithium ion secondary battery which is a flat type (stack type) but not a bipolar type (hereinafter, also simply referred to as a "stack type battery") . As illustrated in Fig. 1, a stack type battery 10 according to this embodiment has a structure in which a power generating element 21 with a substantially rectangular shape, in which charge and discharge reactions actually proceed, is sealed in a battery outer casing material 29 as an outer casing body. Here, the power generating element 21 has a constitution in which a positive electrode, a separator 17, and a negative electrode are stacked. Incidentally, the separator 17 has a non-aqueous electrolyte (for example, liquid electrolyte) within it. The positive electrode has a structure in which a positive electrode active material layer 15 is disposed on both surfaces of a positive electrode current collector 12. The negative electrode has a structure in which a negative electrode active material layer 13 is disposed on both surfaces of a negative electrode current collector 11. Specifically, the negative electrode, the electrolyte layer and the positive electrode are stacked in this order such that one positive electrode active material layer 15 and the negative electrode active material layer 13 adjacent to this face each other via the separator 17. Accordingly, the adjacent positive electrode, electrolyte layer, and negative electrode constitute one single battery layer 19. Hence, it can also be said that the stack type battery 10 illustrated in Fig. 1 has a constitution that plural single battery layers 19 are stacked to be electrically connected in parallel.

Incidentally, the negative electrode active material layer 13 is disposed only on one surface of both the outermost layer positive electrode current collectors positioned on both outermost layers of the power generating element 21. However, an active material layer may be formed on both surfaces thereof . In other words, not a current collector exclusive for an outermost layer in which an active material layer is formed on only one surface is used but a current collector having an active material layer on both surfaces may be directly used as the current collector of the outermost layer. Furthermore, a positive electrode active material layer may be disposed on one surface or both surfaces of the same outermost layer positive electrode current collector by reversing the disposition of the positive electrode and negative electrode in Fig. 1 so that the outermost layer positive electrode current collector is disposed on both outermost layers of the power generating element 21.

The positive electrode current collector 12 and negative electrode current collector 11 may have a structure in which a positive electrode current collecting plate (tab) 27 and a negative electrode current collecting plate (tab) 25, which conductively communicate with each electrode (positive electrode and negative electrode), are attached to the positive electrode current collector 12 and negative electrode current collector 11 and led to the outside of the battery outer casing material 29 so as to be inserted between the end parts of the battery outer casing material 29. If necessary, each of the positive electrode current collecting plate 27 and negative electrode current collecting plate 25 may be attached to the positive electrode current collector 12 and negative electrode current collector 11 of each electrode via a positive electrode lead and a negative electrode lead (not illustrated) by ultrasonic welding, resistance welding, or the like.

Incidentally, although a stack type battery that is a flat type (stack type), but not a bipolar type, is illustrated in Fig. 1, it may be a bipolar type battery including a bipolar type electrode which has a positive electrode active material layer electrically bound to one surface of a current collector and a negative electrode active material layer electrically bound to the opposite surface of the current collector. In this case, one current collector plays roles of both the positive electrode current collector and the negative electrode current collector.

Hereinafter, the respective members will be described in more detail.

### [Positive electrode]

The positive electrode is one which includes a positive electrode current collector and a positive electrode active material layer formed on the surface of the positive electrode current collector.

### (Positive electrode current collector)

The material constituting the positive electrode current collector is not particularly limited, but a metal is suitably used. Specific examples of the metal may include aluminum, nickel, iron, stainless, titanium, copper, and an alloy. In addition to these, a clad material of nickel and aluminum, a clad material of copper and aluminum, or a plating material of a combination of these metals can be preferably used. In addition, it may be a foil obtained by coating aluminum on a metal surface. Among them, aluminum, stainless, and copper are preferable from the viewpoint of the electron conductivity or the potential for operating the battery.

The size of the current collector is decided based on the use of the battery. A current collector having a large area is used, for example, when the current collector is used in a large-size battery which requires a high energy density. The thickness of the current collector is not particularly limited as well. The thickness of the current collector is generally about from 1 to 100 µm.

Further, also in a case in which a negative electrode current collector is used in a negative electrode to be described later, the same material as described above can be used.

### (Positive electrode active material layer)

The positive electrode active material layer contains a positive electrode active material. In the present embodiment, the positive electrode active material essentially contains a lithium nickel-based composite oxide and a spinel type lithium manganese composite oxide. By increasing the content ratio of the lithium nickel-based composite oxide, the non-aqueous electrolyte lithium ion secondary battery of the present embodiment has further increased cycle durability and capacity due to the lithium nickel-based composite oxide. It is generally considered that an increase in capacity due to an increase in ratio of the lithium nickel-based composite oxide is obtained since the spinel type lithium manganese composite oxide has smaller molecule amount than the lithium nickel-based composite oxide and the lithium nickel-based composite oxide has larger reaction lithium number per unit mass. In addition, the non-aqueous electrolyte lithium ion secondary battery of the present embodiment contains the spinel type lithium manganese composite oxide so that safety can be improved, and the content ratio of the spinel type lithium manganese composite oxide is increased so that the safety due to the spinel type lithium manganese composite oxide is further enhanced. By containing the lithium nickel-based composite oxide and the spinel type lithium manganese composite oxide as positive electrode active materials, an excellent positive electrode active material layer which has merits of each of the lithium nickel-based composite oxide and the spinel type lithium manganese composite oxide can be produced.

The positive electrode active material layer containing a lithium nickel-based composite oxide and a spinel type lithium manganese composite oxide is more preferably used particularly in a large-sized battery requiring high safety, particularly, a battery in which an increase in size is defined from the viewpoint of battery capacity and battery area. As such a battery, for example, a large-sized battery in which a value of ratio of a battery area (a projection area of a battery including a battery outer casing) to a rated capacity is 5 cm²/Ah or more and the rated capacity is 3 Ah or more as described later, or the like is mentioned.

The present inventors have attempted SEI film formation on a negative electrode as a measure for further improving cycle durability of the non-aqueous electrolyte lithium ion secondary battery which has a positive electrode including a positive electrode active material layer formed from a lithium nickel-based composite oxide and a spinel type lithium manganese composite oxide. The SEI film is a coating film that is formed on a negative electrode active material layer by a specific compound in the electrolyte, and has a protection effect for the negative electrode. Thus, the SEI film contributes to improvement in cycle durability. The present inventors have conducted intensive studies, and as a result, they found that when the compound having an S=O bond in a molecule to be described later is used, the cycle durability has unexpected significant dependency with respect to the content ratio of the lithium nickel-based composite oxide (or the spinel type lithium manganese composite oxide). Specifically, the present inventors found that when the content ratio of the lithium nickel-based composite oxide is set in a predetermined range, a significant cycle durability improvement effect is exhibited; on the other hand, when the content ratio of the lithium nickel-based composite oxide is set out of the above range, improvement in cycle durability cannot be obtained. Incidentally, this significant addition amount dependency is not confirmed in the positive electrode which includes a positive electrode active material layer formed only from a lithium nickel-based composite oxide or a spinel type lithium manganese composite oxide.

During the course of proceeding with further studies, the present inventors found that the compound having an S=O bond in a molecule can improve the cycle durability of a non-aqueous electrolyte lithium ion secondary battery which includes a positive electrode using a positive electrode active material formed from a spinel type lithium manganese composite oxide. Moreover, they found that the compound having an S=O bond in a molecule decreases the cycle durability of a non-aqueous electrolyte lithium ion secondary battery which includes a positive electrode using a positive electrode active material formed from a lithium nickel-based composite oxide.

This phenomenon is assumed to be caused by the action of the compound having an S=O bond in a molecule on the lithium nickel-based composite oxide and spinel type lithium manganese composite oxide, and the detailed assumed mechanism thereof will be described in the description of the compound having an S=O bond in a molecule to be described later.

From these results, it is considered that the content ratio dependency of the lithium nickel-based composite oxide is obtained by a balance between the cycle durability decrease effect with respect to a lithium nickel-based composite oxide system and the cycle durability improvement effect with respect to a spinel type lithium manganese composite oxide system. In order to achieve excellent capacitive characteristics, cycle durability, and safety in the positive electrode active material layer formed from the lithium nickel-based composite oxide and the spinel type lithium manganese composite oxide as a result of the various actions, it is necessary to select a most suitable content ratio of the lithium nickel-based composite material. The present embodiment, surprisingly, can realize the balance between the cycle durability and the characteristics, which is difficult to achieve in the related art, by containing the lithium nickel-based composite oxide, in which the cycle durability is decreased by the presence of the compound having an S=O bond in a molecule, in the positive electrode active material layer at a high content ratio as described later. Incidentally, the above-described mechanism is based on the assumption, and correctness/incorrectness thereof does not affect the technical scope of the present embodiment.

The content ratio of the lithium nickel-based composite oxide in the positive electrode active material layer in the present embodiment is 50% by mass or more with respect to the total mass of the lithium nickel-based composite oxide and the spinel type lithium manganese composite oxide, preferably 50 to 90% by mass, more preferably 60 to 80% by mass, and further preferably 65 to 75% by mass from the viewpoint of the above-described balance between capacity, cycle durability and safety. When the content ratio of the lithium nickel-based composite oxide is less than 50% by mass with respect to the total mass of the lithium nickel-based composite oxide and the spinel type lithium manganese composite oxide, particularly, an improvement in cycle durability is not sufficient.

Incidentally, a ratio of the total amount of the lithium nickel-based composite oxide and the spinel type lithium manganese composite oxide of the total amount of 100% by mass of the positive electrode active material contained in the positive electrode active material layer is preferably 50% by mass or more, more preferably 70% by mass or more, further preferably 85% by mass or more, still more preferably 90% by mass or more, particularly preferably 95% by mass or more, and most preferably 100% by mass.

The thickness of the positive electrode active material layer is not particularly limited, and the known knowledge on a battery can be appropriately referred to. As an example, the thickness of each active material layer (the thickness of the active material layer on one side of the current collector) is about 2 to 100 µm.

### · Lithium nickel-based composite oxide

The composition of the lithium nickel-based composite oxide is not specifically limited as long as it is a composite oxide containing lithium and nickel. Typical examples of the composite oxide containing lithium and nickel may include lithium nickel composite oxide (LiNiO₂). However, a composite oxide in which a part of nickel atoms in lithium nickel composite oxide is substituted with other metal atoms is more preferable, and as a preferred example thereof, a lithium transition metal composite oxide of a layered crystal structure containing nickel, manganese, and cobalt (hereinafter, also simply referred to as "NMC composite oxide") has a layered crystal structure in which a lithium atom layer and a transition metal (Mn, Ni, and Co are orderly disposed) atom layer are alternately stacked via an oxygen atom layer, contains one Li atom per one transition metal M atom, thus has a Li amount to be extracted twice the amount in spinel type lithium manganese oxide, namely, a supply capacity doubles, and it can have a high capacity. In addition, lithium-nickel-manganese-cobalt composite oxide has a higher thermal stability than LiNiO₂, and thus it is particularly advantageous among the nickel-based composite oxides used as a positive electrode active material.

In the present specification, NMC composite oxide also includes a composite oxide in which a part of the transition metal elements is substituted with other metal elements. Examples of the other elements in that case may include Ti, Zr, Nb, W, P, Al, Mg, V, Ca, Sr, Cr, Fe, B, Ga, In, Si, Mo, Y, Sn, V, Cu, Ag, and Zn, preferably Ti, Zr, Nb, W, P, Al, Mg, V, Ca, Sr, and Cr, more preferably, Ti, Zr, P, Al, Mg, and Cr, and even more preferably Ti, Zr, Al, Mg, and Cr from the viewpoint of the improvement in cycle characteristics.

NMC composite oxide preferably has a composition represented by the General Formula: LiₐNi_{b}Mn_{c}Co_{d}MₓO₂ (in the General Formula, a, b, c, d, and x satisfy 0.9 ≤ a ≤ 1.2, 0 < b < 1, 0 < c ≤ 0.5, 0 < d ≤ 0.5, 0 ≤ x ≤ 0.3, and b + c + d = 1; M represents at least one kind selected from the group consisting of Ti, Zr, Nb, W, P, Al, Mg, V, Ca, Sr, and Cr) since the theoretical discharge capacity is high. Here, a represents the atomic ratio of Li, b represents the atomic ratio of Ni, c represents the atomic ratio of Mn, d represents the atomic ratio of Co, and x represents the atomic ratio of M.

The content ratio of nickel contained in the transition metal atoms other than lithium of the NMC composite oxide is preferably 30% by atom or more and 90% by atom or less in terms of composition ratio with respect to the total amount of the transition metal atoms other than lithium of the NMC composite oxide. When the content ratio of nickel is 30% by atom or more, the capacity can be further increased. Such an increase in capacity is assumed to be caused by an increase in the number of lithium atoms per unit mass that contribute to reaction. In addition, when the content ratio of nickel is 90% by atom or less, safety can be further improved. Moreover, when the content ratio of nickel is 90% by atom or less, in addition to improvement in safety described above, an effect of further improving cycle durability is also obtained. Such improvement in cycle durability is assumed to be caused by a decrease in the number of lithium atoms moving in and out to the positive electrode active material layer by decreasing the number of lithium atoms per unit mass. From the viewpoints, the content ratio of nickel contained in the transition metal atoms other than lithium of the NMC composite oxide is further preferably 30% by atom or more and 80% by atom or less.

Incidentally, the composition of the respective elements can be measured by induction coupled plasma (ICP) spectroscopy.

In general, nickel (Ni), cobalt (Co) and manganese (Mn) are known to contribute to the capacity and output characteristics from the viewpoint of the improvement in purity and electron conductivity of the material.

A part of the transition metals in the crystal lattice is substituted with Ti and the like that is the other element in the NMC composite oxide (element M in General Formula (1)). A part of transition element may be substituted with other metal element from the viewpoint of the cycle characteristics. The crystal structure is stabilized as at least one kind selected from the group consisting of Ti, Zr, Nb, W, P, Al, Mg, V, Ca, Sr and Cr that is the other metal element is dissolved as a solid solution, thus a decrease in capacity of a battery is prevented even charge and discharge are repeated and it is believed that excellent cycle characteristics can be achieved.

The NMC composite oxide is not particularly limited, but examples thereof include LiNi_{0.30}Mn_{0.35}Co_{0.35}O2, LiNi_{1/3}Mn_{1/3}Co_{1/3}O₂, LiNi_{0.50}Mn_{0.30}Co_{0.20}O₂, LiNi_{0.6}Mn_{0.2}Co_{0.2}O₂, LiNi_{0.8}Mn_{0.1}Co_{0.1}O₂, and LiNi_{0.90}Mn_{0.05}Co_{0.05}O₂.

The lithium nickel-based composite oxide also has a constitution that the secondary particles are formed by the aggregation of primary particles. In addition, the average particle diameter of the primary particles (average primary particle diameter) is preferably 0.9 µm or less, more preferably from 0.20 to 0. 6 µm, and even more preferably from 0.25 to 0. 5 µm. In addition, the average particle diameter of the secondary particles (average secondary particle diameter) is preferably from 5 to 20 µm and more preferably from 5 to 15 µm. Herein, in the present specification, values of the average primary particle diameter, the average secondary particle diameter, and the crystallite diameter of the lithium nickel-based composite oxide can be measured by known methods.

Furthermore, for the lithium nickel-based composite oxide, the diffraction peak of the (104) surface and the diffraction peak of the (003) surface which are obtained by the powder X-ray diffraction measurement have a diffraction peak intensity ratio ((003)/(104)) of preferably 1.28 or more and more preferably from 1.35 to 2.1. In addition, the diffraction peak integrated intensity ratio ((003)/(104)) is preferably 1.08 or more and more preferably from 1.10 to 1.45.

The lithium nickel-based composite oxide such as NMC composite oxide can be produced by selecting various known methods such as a co-precipitation method and a spray drying method. It is preferable to use a co-precipitation method since the production of the composite oxide according to the present aspect is easy. Specifically, as a method for synthesizing NMC composite oxide, NMC composite oxide can be obtained, for example, by the method described in JP-A-2011-105588, in which a nickel-cobalt-manganese composite oxide is produced by the co-precipitation method, the nickel-cobalt-manganese composite oxide is then mixed with a lithium compound, and the mixture is calcined. Hereinafter, the method will be described in detail.

Raw material compounds of a composite oxide, for example, a Ni compound, a Mn compound, and a Co compound, are dissolved in a suitable solvent such as water so as to have a desired composition of materials of an active material. Examples of the Ni compound, the Mn compound, and the Co compound include sulfate, nitrate, carbonate, acetate, oxalate, oxide, hydroxide, and halide of the metal element. Specific examples of the Ni compound, the Mn compound, and the Co compound include nickel sulfate, cobalt sulfate, manganese sulfate, nickel acetate, cobalt acetate, and manganese acetate, but they are not limited thereto. During the process, as necessary, in order to have a desired composition of an active material, a compound containing a metal element for replacing a part of the layered lithium metal composite oxide which forms the active material may be further incorporated. For example, a compound containing at least one metal element such as Ti, Zr, Nb, W, P, Al, Mg, V, Ca, Sr, or Cr may be further incorporated.

A co-precipitation reaction can be performed by neutralization and precipitation reactions using the above raw material compounds and an alkali solution. Accordingly, metal composite hydroxide or metal composite carbonate containing the metal included in the above raw material compounds can be obtained. Examples of the alkali solution which can be used include an aqueous solution of sodium hydroxide, potassium hydroxide, sodium carbonate, or ammonia. For the neutralization reaction, it is preferable to use sodium hydroxide, sodium carbonate, or a mixture solution thereof. In addition, it is preferable to use an aqueous ammonia solution or ammonia salt for a complex reaction.

The addition amount of the alkali solution used for neutralization reaction is sufficient to have the equivalent ratio of 1.0 to components of the whole metal salts which are contained to be neutralized. However, for pH control, it is preferably added together with an excess alkali amount.

The aqueous ammonia solution or ammonia salt used for a complex reaction is preferably added such that the ammonia concentration in reaction liquid is in a range of 0.01 to 2.00 mol/L. The pH of the reaction solution is preferably controlled in a range of 10. 0 to 13.0. The reaction temperature is preferably 30°C or higher, and more preferably 30 to 60°C.

The composite hydroxide obtained by co-precipitation reaction is then preferably filtered by suction, washed with water, and dried. Subsequently, by mixing and calcining nickel-cobalt-manganese composite hydroxide with a lithium compound, the NMC composite oxide can be obtained. Examples of the Li compound include lithium hydroxide or a hydrate thereof, lithium peroxide, lithium nitrate, and lithium carbonate.

The calcination treatment may be performed by one step, but it is preferably performed by two steps (temporary calcination and main calcination). According to two-step calcination, a composite oxide can be obtained efficiently. The conditions for temporary calcination are not particularly limited and may vary depending on the lithium raw material, and thus the conditions cannot be unambiguously defined. Incidentally, the temperature increase rate is preferably 1 to 20°C/minute from room temperature. Further, the atmosphere is preferably either air or oxygen atmosphere. Here, when the NMC composite oxide is synthesized by using lithium carbonate as the Li raw material, temperature for temporary calcination is preferably 500 to 900°C, more preferably 600 to 800°C, and further preferably 650 to 750°C. Furthermore, time for temporary calcination is preferably 0.5 to 10 hours and more preferably 4 to 6 hours. Meanwhile, as for the conditions for main calcination, the temperature increase rate is preferably 1 to 20°C/minute from room temperature, although it is not particularly limited thereto. Furthermore, the atmosphere is preferably either air or oxygen atmosphere. In addition, when the NMC composite oxide is synthesized by using lithium carbonate as the Li raw material, temperature for calcination is preferably 800 to 1200°C, more preferably 850 to 1100°C, and further preferably 900 to 1050°C. Further, time for temporary calcination is preferably 1 to 20 hours and more preferably 8 to 12 hours.

When a trace amount of a metal element for replacing a part of the layered lithium metal composite oxide forming materials of an active material is added as necessary, any means such as a method of mixing the metal element in advance with nickel, cobalt, and a manganate salt, a method of adding the metal element simultaneously with nickel, cobalt, and a manganate salt, a method of adding the metal element to a reaction solution during the reaction, and a method of adding the metal element to the nickel-cobalt-manganese composite oxide with a Li compound may be employed as the method of adding the metal element.

The lithium nickel-based composite oxide can be produced by suitably controlling the reaction conditions such as pH of a reaction solution, reaction temperature, reaction concentration, addition rate, and time for stirring.

### · Spinel type lithium manganese composite oxide

The spinel type lithium manganese composite oxide typically has a composition of LiMn₂O₄ and is a composite oxide having a spinel structure and essentially containing lithium and manganese. As for the specific configuration and production method thereof, reference may be appropriately made to the knowledge known in JP 2000-77071 A or the like.

The spinel type lithium manganese composite oxide also has a configuration of secondary particles that are formed by the aggregation of primary particles. Further, the average particle diameter of the secondary particles (average secondary particle diameter) is preferably 5 to 50 µm and more preferably 7 to 20 µm.

### · Other components

As necessary, the positive electrode active material layer can further contain other additives such as a positive electrode active material other than the aforementioned positive electrode active material, a conductive aid, a binder, an electrolyte (a polymer matrix, an ion conductive polymer, an electrolyte solution, and the like), and a lithium salt for enhancing ion conductivity in addition to the aforementioned positive electrode active material.

The conductive aid refers to an additive that is blended in order to improve the conductivity of the positive electrode active material layer. Examples of the conductive aid include a carbon material such as carbon black including ketjen black and acetylene black, graphite, or carbon fiber. When the active material layer contains a conductive aid, an electron network in the inside of the active material layer is formed effectively, which can contribute to the improvement in output characteristics of the battery.

Examples of the electrolyte salt (lithium salt) include Li(C₂F_{S}SO₂)₂N, LiPF₆, LiBF₄, LiClO₄, LiAsF₆, and LiCF₃SO₃.

Examples of the ion conductive polymer include a polyethylene oxide (PEO)-based polymer and a polypropylene oxide (PPO)-based polymer.

The content of a material, which may function as an active material, in the positive electrode active material layer is not particularly limited. The content thereof may be adjusted by appropriately referring to the known knowledge on the lithium ion secondary battery, but is preferably 85 to 99.5% by mass.

A binder used in the positive electrode active material layer is not particularly limited, and for example, the following materials may be mentioned. Thermoplastic polymers such as polyethylene, polypropylene, polyethylene terephthalate (PET), polyether nitrile, polyacrylonitrile, polyimide, polyamide, cellulose, carboxymethyl cellulose (CMC) and any salt thereof, an ethylene-vinyl acetate copolymer, polyvinylidene chloride, styrene-butadiene rubber (SBR), isoprene rubber, butadiene rubber, ethylene-propylene rubber, an ethylene-propylene-diene copolymer, a styrene-butadiene-styrene block copolymer and a hydrogen-added product thereof, and a styrene-isoprene-styrene block copolymer and a hydrogen-added product thereof, fluorine resins such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF), vinylidene fluoride-based fluorine rubber such as vinylidene fluoride-hexafluoropropylene-based fluorine rubber (VDF-HFP-based fluorine rubber), vinylidene fluoride-hexafluoropropylene-tetrafluoroethylene-based fluorine rubber (VDF-HFP-TFE-based fluorine rubber), vinylidene fluoride-pentafluoropropylene-based fluorine rubber (VDF-PFP-based fluorine rubber), vinylidene fluoride-pentafluoropropylene-tetrafluoroethylene-based fluorine rubber (VDF-PFP-TFE-based fluorine rubber), vinylidene fluoride-perfluoromethyl vinyl ether-tetrafluoroethylene-based fluorine rubber (VDF-PFMVE-TFE-based fluorine rubber), and vinylidene fluoride-chlorotrifluoroethylene-based fluorine rubber (VDF-CTFE-based fluorine rubber), an epoxy resin, and the like are exemplified. These binders may be used singly, or two or more kinds thereof may be used concurrently.

The positive electrode can be produced by forming the positive electrode active material layer on the positive electrode current collector. The formation method of the positive electrode active material layer is not particularly limited, but examples thereof include a method of applying a positive electrode active material slurry containing at least the positive electrode active material and a slurry viscosity adjusting solvent onto the positive electrode current collector, drying the positive electrode active material slurry, and then subjecting to press molding using a roll press machine. The slurry viscosity adjusting solvent is not particularly limited, but for example, N-methyl-2-pyrrolidone (NMP) or the like can be used.

### [Negative electrode active material layer]

The negative electrode active material layer contains an active material, and if necessary, further contains other additives such as a conductive aid, a binder, an electrolyte (a polymer matrix, an ion conductive polymer, an electrolyte solution, and the like), and a lithium salt for enhancing ion conductivity.

The thickness of the negative electrode active material layer is not particularly limited, and the known knowledge on a battery can be appropriately referred to. As an example, the thickness of each active material layer (the thickness of the active material layer on one side of the current collector) is about 2 to 100 µm.

The content of the material, which may function as an active material, in the negative electrode active material layer is the same as the content of the material, which may function as an active material, in the positive electrode active material.

The other additives such as a conductive aid, a binder, an electrolyte (a polymer matrix, an ion conductive polymer, an electrolyte solution, and the like), and a lithium salt for enhancing ion conductivity are the same as those described above in the section of the positive electrode active material layer.

Examples of the negative electrode active material may include a carbon material such as graphite, soft carbon, and hard carbon, a lithium transition metal composite oxide (for example, Li₄Ti₅O₁₂), a metal material, and a lithium alloy-based negative electrode material. Depending on the case, two or more kinds of negative electrode active materials may be used concurrently. Preferably, a carbon material or a lithium transition metal composite oxide is used as the negative electrode active material from the viewpoint of the capacity and output characteristics. In addition, it is needless to say that a negative electrode active material other than those described above may also be used.

The negative electrode active material layer preferably contains at least an aqueous binder. The aqueous binder exhibits high binding property. In addition, procurement of water as a raw material is easy and also only water vapor is generated during drying, and thus there is an advantage that the investment on facilities of a production line can be greatly cut down and a decrease in environmental burden can be achieved.

The aqueous binder refers to a binder which has water as a solvent or a dispersion medium, and specific examples thereof include a thermoplastic resin, a polymer exhibiting rubber elasticity, a water-soluble polymer, and any mixture thereof. Here, the binder which contains water as a dispersion medium includes all which are regarded as latex or an emulsion, and it refers to a polymer that is emulsified in water or suspended in water. Examples thereof may include a polymer latex obtained by emulsion polymerization in a self-emulsifying system.

Specific examples of the aqueous binder may include a styrene polymer (styrene-butadiene rubber, a styrene-vinyl acetic acid copolymer, styrene-acryl copolymer or the like), acrylonitrile-butadiene rubber, methyl methacrylate-butadiene rubber, (meth)acrylic polymer (polyethyl acrylate, polyethyl methacrylate, polypropyl acrylate, polymethyl methacrylate (methyl methacrylate rubber), polypropyl methacrylate, polyisopropyl acrylate, polyisopropyl methacrylate, polybutyl acrylate, polybutyl methacrylate, polyhexyl acrylate, polyhexyl methacrylate, polyethylhexyl acrylate, polyethylhexyl methacrylate, polylauryl acrylate, polylauryl methacrylate, or the like), polytetrafluoroethylene, polyethylene, polypropylene, an ethylene-propylene copolymer, polybutadiene, butyl rubber, fluorine rubber, polyethylene oxide, polyepichlorohydrin, polyphosphagen, polyacrylonitrile, polystyrene, an ethylene-propylene-diene copolymer, polyvinylpyridine, chlorosulfonated polyethylene, a polyester resin, a phenol resin, an epoxy resin; polyvinyl alcohol (the average polymerization degree is suitably from 200 to 4000 and more suitably from 1000 to 3000, and the saponification degree is suitably 80% by mol or more and more suitably 90% by mol or more) and any modified product thereof (a product obtained by saponifying from 1 to 80% by mol of the vinyl acetate units in a copolymer of ethylene/vinyl acetate = 2/98 to 30/70 (molar ratio), a product obtained by partially acetalizing polyvinyl alcohol at from 1 to 50% by mol, or the like), starch and any modified product thereof (oxidized starch, phosphoric acid esterified starch, cationized starch, or the like), cellulose derivatives (carboxymethyl cellulose, methyl cellulose, hydroxypropyl cellulose, hydroxyethyl cellulose, and any salt thereof), polyvinylpyrrolidone, polyacrylic acid (salt), polyethylene gylcol, a copolymer of (meth)acrylamide and/or a (meth)acrylate salt [(meth)acrylamide polymer, a (meth)acrylamide-(meth)acrylate salt copolymer, a (meth) acrylic acid alkyl (having from 1 to 4 carbon atoms) ester-(meth)acrylate salt copolymer, or the like], a styrene-maleate salt copolymer, a mannich modified product of polyacrylamide, a formalin condensation type resin (a urea-formalin resin, a melamin-formalin resin or the like), a polyamide polyamine or dialkylamine-epichlorohydrin copolymer, polyethyleneimine, casein, soybean protein, synthetic protein, and a water-soluble polymer such as any mannan galactan derivative. These aqueous binders may be used singly or two or more kinds thereof may be used concurrently.

From the viewpoint of binding property, the aqueous binder preferably contains at least one rubber-based binder selected from the group consisting of styrene-butadiene rubber, acrylonitrile-butadiene rubber, methyl methacrylate-butadiene rubber, and methyl methacrylate rubber. Furthermore, the aqueous binder preferably contains styrene-butadiene rubber since the binding property thereof is favorable.

In the case of using styrene-butadiene rubber as the aqueous binder, it is preferable to concurrently use the aforementioned water-soluble polymer from the viewpoint of the improvement in coating property. Examples of the water-soluble polymer which is suitably concurrently used with styrene-butadiene rubber may include polyvinyl alcohol and any modified product thereof, starch and any modified product thereof, cellulose derivatives (carboxymethyl cellulose, methyl cellulose, hydroxyethyl cellulose, and any salt thereof), polyvinylpyrrolidone, polyacrylic acid (salt), or polyethylene glycol. Among them, styrene-butadiene rubber and carboxymethyl cellulose (salt) are preferably combined as a binder. The mass content ratio of the styrene-butadiene rubber to the water-soluble polymer is not particularly limited, but it is preferable that the ratio of styrene-butadiene rubber: water-soluble polymer is 1: 0.1 to 10 and more preferably from 0.5 to 2.

In the binder used in the negative electrode active material layer, the content of the aqueous binder is preferably from 80 to 100% by mass, preferably from 90 to 100% by mass, and preferably 100% by mass.

The average particle diameter of the negative electrode active material is not particularly limited, but is preferably 1 to 100 µm and more preferably 1 to 20 µm from the viewpoint of having high output.

The negative electrode can be produced by forming the negative electrode active material layer on the negative electrode current collector. The formation method of the negative electrode active material layer is not particularly limited, but examples thereof include a method of applying a negative electrode active material slurry containing at least the negative electrode active material and a slurry viscosity adjusting solvent onto the negative electrode current collector, drying the negative electrode active material slurry, and then subjecting to press molding using a roll press machine. The slurry viscosity adjusting solvent is not particularly limited, but for example, N-methyl-2-pyrrolidone (NMP) or the like can be used.

### [Separator (electrolyte layer)]

A separator has a function to hold the electrolyte so as to secure the lithium ion conductivity in between the positive electrode and the negative electrode and also a function as a partition wall between the positive electrode and the negative electrode.

Examples of the separator shape may include a porous sheet separator or a non-woven separator composed of a polymer or a fiber which absorbs and holds the electrolyte.

As the porous sheet separator composed of a polymer or a fiber, a microporous (microporous membrane) separator can be used, for example. Specific examples of the porous sheet composed of a polymer or a fiber may include a microporous (microporous membrane) separator which is composed of a polyolefin such as polyethylene (PE) or polypropylene (PP); a laminate in which a plurality of these are laminated (for example, a laminate having a three-layer structure of PP/PE/PP), and a hydrocarbon-based resin such as polyimide, aramid, or polyvinylidene fluoride-hexafluoropropylene (PVdF-HFP), or a glass fiber.

The thickness of the microporous (microporous membrane) separator cannot be uniformly defined as it varies depending on the use. For example, for use in a secondary battery for driving a motor of an electric vehicle (EV), a hybrid electric vehicle (HEV), a fuel cell vehicle (FCV), and the like, it is preferably from 4 to 60 µm as a monolayer or a multilayer. Fine pore diameter of the microporous (microporous membrane) separator is preferably 1 µm or less at most (usually, the pore diameter is about several tens of nanometers).

As the non-woven separator, those known in prior art, such as cotton, rayon, acetate, nylon, polyester; a polyolefin such as PP or PE; polyimide and aramid are used singly or as a mixture. In addition, the bulk density of the non-woven fabric is not particularly limited as long as sufficient battery characteristics are obtained by a polymer gel electrolyte impregnated into the non-woven fabric. Furthermore, it is sufficient that the thickness of the non-woven separator is the same as that of the electrolyte layer. It is preferably from 5 to 200 µm and even more preferably from 10 to 100 µm.

In addition, as described above, the separator also contains an electrolyte. The electrolyte is not particularly limited as long as it can exhibit such functions, but a liquid electrolyte or a gel polymer electrolyte may be used. The distance between electrodes is stabilized, an occurrence of polarization is suppressed, and the durability (cycle characteristics) is improved as a gel polymer electrolyte is used.

The electrolyte essentially contains a compound having an S=O bond in a molecule.

The concentration of the compound having an S=O bond in a molecule in the electrolyte is adjusted in a predetermined range to improve the cycle durability of the non-aqueous electrolyte lithium ion secondary battery.

Conventionally, it is known that by using a compound, which forms the SEI film on the surface of the negative electrode active material, as an additive having the effect of protecting the electrode, the side reaction between the negative electrode active material on the negative electrode and the electrolyte solution during charge and discharge is suppressed to prevent the deterioration of the negative electrode active material so that the cycle durability can be improved. The present inventors have confirmed the effects of various SEI film forming agents, and as a result, they found that, in the system using the positive electrode active material layer formed from the lithium nickel-based composite oxide and the spinel type lithium manganese composite oxide, there is unexpected significant dependency of cycle durability with respect to the concentration of the compound having an S=O bond in a molecule. Specifically, it is found that when the concentration of the compound having an S=O bond in a molecule in the electrolyte is adjusted in a predetermined range, a significant cycle durability improvement effect is exhibited, but when the concentration thereof is adjusted out of the range, the cycle durability improvement effect cannot be obtained. Herein, it is known that the compound having an S=O bond in a molecule includes those which can form the SEI film; however, the cycle durability improvement effect described above is completely different from the effect obtained by the SEI film formation on the surface of the negative electrode active material, which is conventionally known, in terms of behavior thereof, and more significant improvement effect is exhibited.

In this regard, the present inventors have further conducted studies, and as a result, they found that the compound having an S=O bond in a molecule largely improves the cycle durability of the non-aqueous electrolyte lithium ion secondary battery including the positive electrode using the positive electrode active material layer formed from the spinel type lithium manganese composite oxide. This effect is assumed to be obtained by the compound having an S=O bond in a molecule which has the effect of suppressing Mn elution from the spinel type lithium manganese composite oxide in addition to the SEI film formation action on the negative electrode and also contributes to deterioration suppression of the positive electrode active material layer. More specifically, it is considered that Mn elution easily occurs in the spinel type lithium manganese composite oxide, the eluted Mn is precipitated on the negative electrode, and Li precipitation occurs due to the precipitated Mn as a core to induce the capacity decrease of a cell. Herein, it is assumed that the cycle durability can be improved by suppressing the Mn elution when the compound having an S=O bond in a molecule is coordinated at the oxygen lost part in the spinel type lithium manganese composite oxide.

Further, the present inventors found that when the compound having an S=O bond in a molecule is used in the non-aqueous electrolyte lithium ion secondary battery including the positive electrode using the positive electrode active material layer formed only from the lithium nickel-based composite oxide, cracks occur in the positive electrode active material layer, which leads to deterioration of the cycle durability. It is assumed that this deterioration is caused by reaction between the compound having an S=O bond in a molecule and the residual lithium in which reaction present between primary particles does not occur when expansion of the lithium nickel-based composite oxide occurs according to the charge so that the resultant product is present between the primary particles to inhibit shrinkage during discharge and thus cracks occur.

Accordingly, it is considered that a significant concentration dependency of the compound having an S=O bond in a molecule is obtained by the balance among the effect of forming the SEI film on the negative electrode, the effect of suppressing Mn elution with respect to the spinel type lithium manganese composite oxide, and the deterioration with respect to the lithium nickel-based composite oxide.

Further, as described in the description of the positive electrode, the cycle durability also depends on the properties of the positive electrode active material layer itself containing a lithium nickel-based composite oxide and a spinel type lithium manganese composite oxide and the content ratio of the lithium nickel-based composite oxide.

Therefore, it is considered that the significant cycle durability improvement effect can be obtained by adjusting both the content ratio of the lithium nickel-based composite oxide and the concentration of the compound having an S=O bond in a molecule to values in an optimal range. Incidentally, the above-described mechanism is based on the assumption, and correctness/incorrectness thereof does not affect the technical scope of the present embodiment.

The concentration of the compound having an S=O bond in a molecule in the electrolyte is 0.4 to 2.0% by mass. When the concentration thereof in the electrolyte is less than 0.4% by mass, the cycle durability improvement effect cannot be obtained. The reason for this is assumed from the above-described mechanism that the concentration of the compound having an S=O bond in a molecule in the electrolyte is not the amount enough to achieve the SEI film formation performance on the surface of the negative electrode active material layer and the suppression of Mn elution from the spinel type lithium manganese composite oxide. In addition, when the concentration thereof in the electrolyte is more than 2.0% by mass, excellent cycle durability improvement effect cannot be obtained. The reason for this is considered that an increase in resistance occurs due to an increase in thickness of the SEI film. In addition, the reason for this is assumed that according to the above-described mechanism, the concentration thereof is in the range in which the influence of deterioration of the lithium nickel-based composite oxide in the positive electrode active material layer is larger than the SEI film formation performance on the surface of the negative electrode active material layer and the effect of suppressing Mn elution from the spinel type lithium manganese composite oxide. From the above-described viewpoints, the concentration thereof is preferably 0.8 to 1.6% by mass and further preferably 1.0 to 1.4% by mass.

The compound having an S=O bond is not particularly limited, but is preferably a cyclic sulfonate ester in terms of excellent cycle durability improvement effect.

The cyclic sulfonate ester is preferably a compound represented by the following Formula (1):

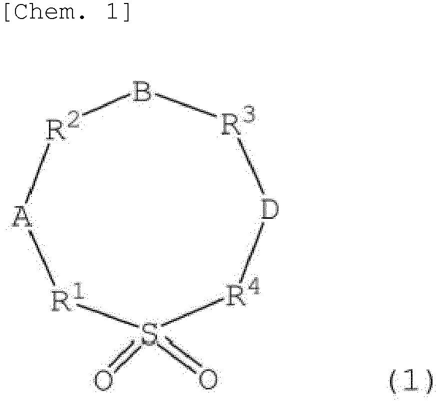

In the formula,
O represents oxygen, and S represents sulfur;
A, B, and D each independently represent at least one group selected from the group consisting of a single bond, oxygen, sulfur, a carbonyl group, a thiocarbonyl group, a sulfinyl group, a sulfonyl group, and a NR⁵ group, and at this time, R⁵ represents at least one group selected from the group consisting of a hydrogen atom, a monovalent aliphatic hydrocarbon group, a monovalent alicyclic hydrocarbon group, and a monovalent aromatic hydrocarbon group; and
R¹, R², R³, and R⁴ each independently represent a single bond or a divalent aliphatic hydrocarbon group.

In Formula (1), R⁵ is at least one group selected from the group consisting of a hydrogen atom, a monovalent aliphatic hydrocarbon group, a monovalent alicyclic hydrocarbon group, and a monovalent aromatic hydrocarbon group. The aliphatic hydrocarbon group is a linear or branched alkyl group having preferably 1 to 10 carbon atoms, more preferably 1 to 5 carbon atoms, and further preferably 1 to 3 carbon atoms, and examples thereof include a methyl group, an ethyl group, a n-propyl group, a n-butyl group, a n-pentyl group (an amyl group), a n-hexyl group, a n-heptyl group, a n-octyl group, a n-nonyl group, a n-decyl group, an i-propyl group, a sec-butyl group, an i-butyl group, a t-butyl group, a 1-methylbutyl group, a 1-ethylpropyl group, a 2-methylbutyl group, a neopentyl group, a 1,2-dimethylpropyl group, a 1,1-dimethylpropyl group, a 1,3-dimethylbutyl group, a 3,3-dimethylbutyl group, a 2-ethylbutyl group, a 2-ethyl-2-methylpropyl group, a 1-methylheptyl group, a 2-ethylhexyl group, a 1,5-dimethylhexyl group, and a t-octyl group. The alicyclic hydrocarbon group is a cycloalkyl group having preferably 3 to 12 carbon atoms, more preferably 3 to 7 carbon atoms, further preferably 3 to 5 carbon atoms, and particularly preferably 3 carbon atoms, and examples thereof include a cyclopropyl group, a cyclopropyl methyl group, a cyclobutyl group, a cyclobutyl methyl group, a cyclopentyl group, a cyclohexyl group, a cyclohexyl methyl group, a cycloheptyl group, a cyclooctyl group, a cyclohexyl propyl group, a cyclododecyl group, a norbornyl group (C7), an adamantyl group (C10), and a cyclopentyl ethyl group. The aromatic hydrocarbon group is an aryl group having preferably 6 to 30 carbon atoms, more preferably 6 to 20 carbon atoms, further preferably 6 to 10 carbon atoms, and particularly preferably 6 to 9 carbon atoms, and examples thereof include a phenyl group, an alkylphenyl group, a phenyl group substituted with an alkylphenyl group, and a naphthyl group.

R¹, R², R³, and R⁴ each independently represent a single bond or a divalent aliphatic hydrocarbon group. The divalent aliphatic hydrocarbon group may be any linear or branched alkylene groups having preferably 1 to 10 carbon atoms, more preferably 1 to 5 carbon atoms, and further preferably 1 to 3 carbon atoms, and examples thereof include a methylene group, an ethylene group, a trimethylene group, an isopropylene group, and a tetramethylene group. In addition, the divalent aliphatic hydrocarbon group may be any linear or branched alkenylene groups having preferably 2 to 10 carbon atoms, more preferably 2 to 5 carbon atoms, and further preferably 2 to 3 carbon atoms, and examples thereof include a vinylene group, a 1-propenylene group, an allylene group, an isopropenylene group, a 1-butenylene group, a 2-butenylene group, a 1-pentenyl group, and a 2-pentenyl group.

Further, the cyclic sulfonate ester is more preferably a compound represented by the following Formula (2):

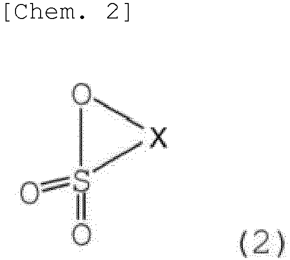

In the formula,
X is an alkylene group, sulfonylalkylene group, alkenylene group, or sulfonylalkenylene group having 1 to 5 carbon atoms. In Formula (2), the alkylene group further preferably has 1 to 3 carbon atoms, and the alkenylene group further preferably has 2 to 3 carbon atoms. The cyclic sulfonate ester represented by Formula (2) also includes a disulfonic acid compound in which X is a sulfonylalkylene group (-SO₂-CₙH₂ₙ-). As the disulfonic acid compound, an alkylene group having 1 to 3 carbon atoms is further preferable.

Further, the cyclic sulfonate ester is more preferably a compound represented by the following Formula (3):

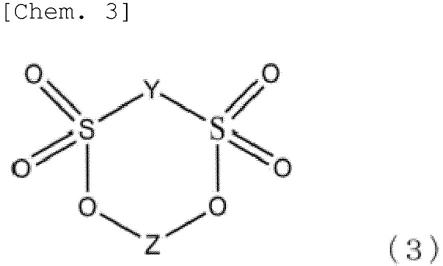

In the formula,
Y is an alkylene group, sulfonylalkylene group, alkenylene group, or sulfonylalkenylene group having 1 to 5 carbon atoms.

Z is an alkylene group, sulfonylalkylene group, alkenylene group, or sulfonylalkenylene group having 1 to 5 carbon atoms. In Formula (3), the alkylene group more preferably has 1 to 3 carbon atoms.

Examples of the cyclic sulfonate esters represented by Formula (1) to Formula (3) include 1, 3-propane sultone (PS), 1,3-prop-1-ene sultone (1,3-propenesultone) (PRS), methylene methanedisulfonate (MMDS), 1,4-butanesultone, and 2,4-butanesultone, but the cyclic sulfonate esters are not limited thereto. As the cyclic sulfonate ester, from the viewpoint of the effect of improving cycle durability, 1,3-propane sultone, 1,3-prop-1-ene sultone, and methylene methanedisulfonate are preferable, 1,3-propane sultone and 1,3-prop-1-ene sultone are more preferable, and 1,3-prop-1-ene sultone is further preferable.

The electrolyte may further contain an additive other than the aforementioned components.

Such an additive preferably contains an electrode protective agent having the function of preventing deterioration of an electrode, particularly, a compound forming an SEI film on the surface of the negative electrode active material, from the viewpoint that the cycle durability can be improved. When the compound forming an SEI film is used, a side reaction between the negative electrode active material on the negative electrode and the electrolyte solution during charge and discharge is suppressed and the deterioration of the negative electrode active material is prevented so that the cycle durability can be improved.

Examples of the compound forming an SEI film include cyclic carbonate derivatives, divalent phenol derivatives, terphenyl derivatives, phosphate derivatives, and lithium fluorophosphate derivatives, but the compound forming an SEI film is not limited thereto. Among these compounds, cyclic carbonate derivatives are preferable, and as the cyclic carbonate derivatives, vinylene carbonate derivatives and ethylene carbonate derivatives are further preferable. Specific examples of the vinylene carbonate derivatives and the ethylene carbonate derivatives include vinylene carbonate (VC), vinyl ethylene carbonate, fluoroethylene carbonate (FEC), difluoroethylene carbonate (DFEC), methyl vinylene carbonate, dimethyl vinylene carbonate, phenyl vinylene carbonate, diphenyl vinylene carbonate, ethyl vinylene carbonate, diethyl vinylene carbonate, 1,2-divinyl ethylene carbonate, 1-methyl-1-vinylethylene carbonate, 1-methyl-2-vinylethylene carbonate, 1-ethyl-1-vinylethylene carbonate, 1-ethyl-2-vinylethylene carbonate, vinyl vinylene carbonate, allyl ethylene carbonate, vinyloxymethyl ethylene carbonate, allyloxymethyl ethylene carbonate, acryloxymethyl ethylene carbonate, methacryloxymethyl ethylene carbonate, ethynyl ethylene carbonate, propargyl ethylene carbonate, ethynyloxymethyl ethylene carbonate, propargyloxyethylene carbonate, methylene ethylene carbonate, and 1,1-dimethyl-2-methyleneethylene carbonate. Among them, vinylene carbonate, vinyl ethylene carbonate, fluoroethylene carbonate and difluoroethylene carbonate are preferable, and vinylene carbonate and fluoroethylene carbonate are more preferable. These electrode protective agents may be used singly or two or more kinds thereof may be used concurrently.

The concentration of the electrode protective agent in the electrolyte is preferably 0.5 to 2.0% by mass. When the concentration thereof in the electrolyte is 0.5% by mass or more, the SEI film formation performance on the surface of the negative electrode active material layer becomes sufficient so that the cycle durability improvement effect is obtained. In addition, when the concentration thereof in the electrolyte is 2.0% by mass or less, an increase in resistance caused by an increase in thickness of the SEI film does not occur so that the cycle durability improvement effect is obtained. From the above-described effect, the concentration of the electrode protective agent in the electrolyte is more preferably 0.7 to 1.8% by mass and further preferably 0.9 mol to 1.6% by mass.

The liquid electrolyte has a function as a carrier of lithium ion. The liquid electrolyte has a form in which a lithium salt as a supporting salt is dissolved in an organic solvent as a plasticizer. Examples of the organic solvent which is used include carbonates such as ethylene carbonate (EC), propylene carbonate (PC), dimethyl carbonate (DMC), diethyl carbonate (DEC), and ethylmethyl carbonate. In addition, as the lithium salt, a compound which can be added to an active material layer of an electrode, such as Li(CF₃SO₂)₂N, Li(C₂F₅SO₂)₂N, LiPF₆, LiBF₄, LiClO₄, LiAsF₆, LiTaF₆, or LiCF₃SO₃ can be adopted in the same manner. The concentration of the lithium salt is not particularly limited, but is preferably 0.8 to 1.2 mol/L.

The gel polymer electrolyte has a constitution that the aforementioned liquid electrolyte is injected into a matrix polymer (host polymer) consisting of an ion conductive polymer. Using a gel polymer electrolyte as an electrolyte is excellent in that the fluidity of the electrolyte disappears and ion conductivity between the respective layers becomes being easily blocked. Examples of the ion conductive polymer which is used as the matrix polymer (host polymer) may include polyethylene oxide (PEO), polypropylene oxide (PPO), polyethylene glycol (PEG), polyacrylronitrile (PAN), polyvinylidene fluoride-hexafluoropropylene (PVdF-HEP), poly(methyl methacrylate (PMMA) and any copolymer thereof.

The matrix polymer of a gel electrolyte can exhibit an excellent mechanical strength as it forms a cross-linked structure. In order to form a cross-linked structure, it is sufficient to conduct a polymerization treatment, such as thermal polymerization, UV polymerization, radiation polymerization, or electron beam polymerization, of a polymerizable polymer for forming a polymer electrolyte (for example, PEO or PPO) using a proper polymerization initiator.

In addition, as a separator, a separator in which a heat resistant insulating layer is laminated on a porous substrate (a separator with heat resistant insulating layer) is preferable. The heat resistant insulating layer is a ceramic layer containing inorganic particles and a binder. As the separator with heat resistant insulating layer, those exhibiting high heat resistance, namely having a melting point or a heat softening point of 150°C or higher and preferably 200°C or higher, are used. By having a heat resistant insulating layer, internal stress of the separator which increases when the temperature increases is alleviated so that the effect of suppressing thermal shrinkage can be obtained. As a result, an occurrence of a short circuit in between electrodes of the battery can be prevented so that a battery configuration in which the deterioration in performance due to an increase in temperature hardly occurs is obtained. In addition, by having a heat resistant insulating layer, the mechanical strength of the separator with heat resistant insulating layer is improved so that the membrane of the separator is hardly broken. Furthermore, because of the effect of suppressing thermal shrinkage and a high mechanical strength, the separator is hardly curled during the manufacturing process of the battery.

The inorganic particles in the heat resistant insulating layer contribute to the mechanical strength or the effect of suppressing thermal shrinkage of the heat resistant insulating layer. The material used as the inorganic particles is not particularly limited. Examples thereof may include oxides (SiO₂, Al₂O₃, ZrO₂, and TiO₂), hydroxides, and nitrides of silicon, aluminum, zirconium and titanium, and any composite thereof. These inorganic particles may be those which are derived from mineral resources such as boehmite, zeolite, apatite, kaolin, mullite, spinel, olivine, and mica, or those which are artificially synthesized. In addition, these inorganic particles may be used singly or two or more kinds thereof may be used concurrently. Among them, it is preferable to use silica (SiO₂) or alumina (Al₂O₃) and it is more preferable to use alumina (Al₂O₃) from the viewpoint of cost.

The weight per unit area of heat resistant particles is not particularly limited, but it is preferably from 5 to 15 g/m². It is desirable that the weight per unit area is within this range since sufficient ion conductivity is obtained and the heat resistant strength is maintained.

The binder in the heat resistant insulating layer has a role to bond the inorganic particles to one another or the inorganic particles to the resin porous substrate layer. The heat resistant insulating layer is stably formed by this binder and also peeling between the porous substrate layer and the heat resistant insulating layer is prevented.

The binder used in the heat resistant insulating layer is not particularly limited, and for example, compounds such as carboxymethyl cellulose (CMC), polyacrylronitrile, cellulose, an ethylene-vinyl acetate copolymer, polyvinyl chloride, styrene-butadiene rubber (SBR), isoprene rubber, butadiene rubber, polyvinylidene fluoride (PVDF), polytetrafluoroethylene (PTFE), polyvinyl fluoride (PVF), and methyl acrylate can be used as the binder. Among these, carboxymethyl cellulose (CMC), methyl acrylate, or polyvinylidene fluoride (PVDF) is preferably used. These compounds may be used singly or two or more kinds thereof may be used concurrently.

The content of the binder in the heat resistant insulating layer is preferably from 2 to 20% by mass with respect to 100% by mass of the heat resistant insulating layer. When the content of binder is 2% by mass or more, the peeling strength between the heat resistant insulating layer and the porous substrate layer can be enhanced and vibration resistance of the separator can be improved. Incidentally, when the content of binder is 20% by mass or less, a gap between the inorganic particles is properly kept so that sufficient lithium ion conductivity can be secured.

It is preferable that the thermal shrinkage rate of the separator with heat resistant insulating layer is 10% or less in both MD and TD after being held for 1 hour under the condition of 150°C and 2 gf/cm². Shrinkage of the separator can be effectively prevented even when the internal temperature of the battery reaches 150°C due to an increased amount of heat generated from the positive electrode as such a highly heat resistant material is used. As a result, an occurrence of a short circuit in between electrodes of the battery can be prevented so that a battery configuration in which the deterioration in performance due to an increase in temperature hardly occurs is obtained.

### [Positive electrode current collecting plate and negative electrode current collecting plate]

The material constituting the current collecting plates (25, 27) is not particularly limited, and a known highly conductive material which has been used as a current collecting plate for a lithium ion secondary battery in prior art can be used. Preferred examples of the material constituting the current collecting plate may include metal materials such as aluminum, copper, titanium, nickel, stainless steel (SUS) and any alloy thereof. From the viewpoint of light weightiness, resistance to corrosion, and high conductivity, aluminum and copper are more preferable. Aluminum is even more preferable. Incidentally, the same material or different materials may be used in the positive electrode current collecting plate 27 and the negative electrode current collecting plate 25.

### [Positive electrode lead and negative electrode lead]

In addition, although it is not illustrated, the current collector 11 and the current collecting plate (25, 27) may be electrically connected to each other via a positive electrode lead or a negative electrode lead. A known material that is used in a lithium ion secondary battery of prior art can be used as the material constituting the positive electrode lead and the negative electrode lead in the same manner. Incidentally, a portion taken out from the outer casing is preferably coated with a heat resistant and insulating thermally shrunken tube or the like so that it is not in contact with the neighboring device or wire to cause electric leakage which affects the product (for example, an automobile component, in particular, an electronic device).

### [Battery outer casing body]

As the battery outer casing body 29, an envelope-shaped casing which can cover the power generating element and uses a laminate film containing aluminum, can be used in addition to a known metal can casing. As the laminate film, a laminate film having a three-layer structure formed by laminating PP, aluminum, and nylon in this order can be used, but it is not limited thereto. A laminate film is preferable from the viewpoint of an increase in output and excellent cooling performance and of being suitably utilizable in a battery for a large-size device such as EV or HEV. In addition, a laminate film containing aluminum is more preferable as the outer casing body since the group pressure applied from the outside to the power generating element can be easily adjusted and thus the thickness of an electrolyte solution layer can be easily adjusted to a desired value. The thickness of the laminate film is not particularly limited, but it is preferably 70 to 180 µm.

### [Cell size]

Fig. 2 is a perspective view illustrating the appearance of a flat lithium ion secondary battery as a representative embodiment of a secondary battery.

As illustrated in Fig. 2, a flat lithium ion secondary battery 50 has a rectangular flat shape, and a positive electrode tab 58 and a negative electrode tab 59 are taken out from both sides for extracting the electric power. A power generating element 57 is covered with a battery outer casing material 52 of the lithium ion secondary battery 50, and the periphery of the battery outer casing material 52 is fused by heat. The power generating element 57 is sealed in a state in which the positive electrode tab 58 and the negative electrode tab 59 are taken out to the outside. Here, the power generating element 57 corresponds to the power generating element 21 of the lithium ion secondary battery 10 illustrated in Fig. 1 described above. The power generating element 57 is one in which plural single battery layers (single cell) 19, which are each constituted by the positive electrode (positive electrode active material layer) 15, the electrolyte layer 17, and the negative electrode (negative electrode active material layer) 13, are stacked.

Incidentally, the lithium ion secondary battery is not limited to those having a flat shape of a stack type. The winding type lithium ion secondary battery may be those having a barrel shape or those having a rectangular flat shape obtained by modifying those having a barrel shape, and it is not particularly limited. A laminate film may be used as the outer casing material of those having a barrel shape, and a barrel can (metal can) of prior art may be used, and it is not particularly limited. Preferably, the power generating element is encased with an aluminum laminate film. Weight saving can be attained by such a form.

In addition, the taking out of the tabs 58 and 59 illustrated in Fig. 2 is not particularly limited as well. The positive electrode tab 58 and the negative electrode tab 59 may be taken out from the same side or each of the positive electrode tab 58 and negative electrode tab 59 may be divided into plural tabs and then taken out from each side, and it is not limited to the form illustrated in Fig. 2. In addition, it is also possible to form a terminal utilizing, for example, a barrel can (metal can) instead of a tab in a winding type lithium ion battery.

A general electric vehicle has a battery storage space of about 170 L. A cell and an auxiliary machine such as a device for controlling charge and discharge are stored in this space, and thus the storage space efficiency of a common cell is about 50%. The cell loading efficiency into this space is a factor to determine the cruising distance of an electric vehicle. The loading efficiency is impaired as the size of a single cell decreases, and thus it is impossible to secure the cruising distance.

Hence, in the present invention, the battery structure of which the power generating element is covered with an outer casing body preferably has a large size. Specifically, the length of the short side of a laminate cell battery is preferably 100 mm or more. Such a large-size battery can be used in a vehicle use. Here, the length of the short side of a laminate cell battery refers to the length of the shortest side. The upper limit of the length of the short side is not particularly limited, but it is usually 400 mm or less.

### [Volume energy density and rated discharge capacity]

According to the market requirement, a general electric vehicle needs to have a driving distance (cruising distance) of 100 km or more per single charge. Considering such a cruising distance, the volume energy density of a battery is preferably 157 Wh/L or more and the rated capacity is preferably 20 Wh or more.

Here, an increase in size of a battery is defined from the relation of the battery area or the battery capacity in the non-aqueous electrolyte lithium ion secondary battery using the positive electrode according to the present aspect as the viewpoint of a large-sized battery that is different from the viewpoint of the physical size of the electrode. Specifically, the non-aqueous electrolyte lithium ion secondary battery according to the present aspect is preferably a flat and stack type laminate battery which has a ratio value of the battery area (projected area of the battery including the battery outer casing body) to the rated capacity of 5cm²/Ah or more and a rated capacity of 3 Ah or more.

The present embodiment is more preferably used particularly in a large-sized non-aqueous electrolyte lithium ion secondary battery with a large capacity and a large area that requires high safety. As described above, the reason for this is that the safety of the positive electrode, which includes a positive electrode active material layer containing a lithium nickel-based composite oxide and a spinel type lithium manganese composite oxide, can be improved by containing a spinel type lithium manganese composite oxide, and the safety due to the spinel type lithium manganese composite oxide can be further increased by increasing the content ratio of the spinel type lithium manganese composite oxide. Further, from the viewpoint of having a large capacity, the value of the rated capacity is more preferably 10 Ah or more, further preferably 20 Ah or more, and particularly preferably 30 Ah or more.

Furthermore, the aspect ratio of a rectangular electrode is preferably from 1 to 3 and more preferably from 1 to 2. Incidentally, the aspect ratio of an electrode is defined by the length/width ratio of a positive electrode active material layer with a rectangular shape. As the aspect ratio is in this range, an advantage of having both the performance required for a vehicle and mounting space can be achieved.

### [Assembled battery]

An assembled battery is constituted by connecting plural batteries. In detail, the assembled battery is one which is constituted by connecting at least two or more batteries in series, in parallel, or in series and parallel. It is possible to freely control the capacity and voltage by connecting the batteries in series and in parallel.

It is also possible to form a detachable small-size assembled battery by connecting plural batteries in series or in parallel. Moreover, by further connecting plural detachable small-size assembled batteries in series or parallel, it is possible to form an assembled battery having a high capacity and a high output which is suitable as a power source or an auxiliary power source for driving a vehicle requiring a high volume energy density and a high volume output density. The number of the connected batteries for fabricating an assembled battery or the number of the stacked small-size assembled batteries for fabricating an assembled battery having a high capacity can be determined depending on the capacity or output of the battery that is mounted to a vehicle (electric vehicle).

### [Vehicle]

The non-aqueous electrolyte lithium ion secondary battery according to the present invention can maintain a discharge capacity even when being used for a long period of time and thus exhibits favorable cycle characteristics. Furthermore, it has a high volume energy density. For use in a vehicle such as an electric vehicle, a hybrid electric vehicle, a fuel cell electric vehicle, or a hybrid fuel cell electric vehicle, a long lifespan is required as well as a high capacity and a large size compared to use in an electric and mobile electronic device. Hence, the non-aqueous electrolyte lithium ion secondary battery can be suitable utilized as a power source for a vehicle, for example, as a power source or as an auxiliary power source for driving a vehicle.

Specifically, the battery or the assembled battery formed by combining plural batteries can be mounted on a vehicle. According to the present embodiment, a battery exhibiting excellent long term reliability, output characteristics, and a long lifespan can be formed, and thus, by mounting such a battery, a plug-in hybrid electric vehicle having a long EV driving distance and an electric vehicle having a long driving distance per one charge can be constituted. This is because a vehicle having a long lifespan and high reliability can be provided as the battery or an assembled battery formed by combining plural batteries is used in, for example, a vehicle such as a hybrid car, a fuel cell electric car, or an electric car (including a two-wheel vehicle (motor bike) or a three-wheel vehicle in addition to all four-wheel vehicles (a passenger vehicle, a truck, a commercial vehicle such as a bus, a compact car, or the like)). However, the use is not limited to a vehicle, and it can be applied to various kinds of power sources of other vehicles, for example, a moving object such as an electric train, and it can be also utilized as a built-in power source of an uninterruptable power source unit.

Incidentally, the non-aqueous electrolyte lithium ion secondary battery that is one kind of non-aqueous electrolyte secondary batteries has been exemplified as an electric device in the above-described embodiment. However, the present embodiment is not limited thereto and is applicable not only to non-aqueous electrolyte secondary batteries of other types and secondary batteries of other types but also to primary batteries. In addition, the present embodiment is applicable not only to batteries but also to electric double-layer capacitors, hybrid capacitors, lithium ion capacitors, and the like.

### [Example]

The present invention will be described in more detail with reference to Examples and Comparative Examples, but the present invention is not limited to the following Examples in any way.

### [Example 1]

### (1) Production of positive electrode

An NMC composite oxide (LiNi_{0.50}Mn_{0.30}Co₀.₂₀O₂) in which the composition ratio (atomic ratio) of the transition metal other than lithium is Ni : Mn : Co = 50 : 30 : 20 (% by atom) was prepared as the lithium nickel-based composite oxide. Herein, the composition ratio (atomic ratio) of the transition metal other than lithium of the NMC composite oxide is Ni : Mn : Co = 50 : 30 : 20 (% by atom) and the content ratio of nickel contained in the transition metal atoms is 50% by atom in terms of composition ratio with respect to the total amount of the transition metal atoms other than lithium.

Further, a spinel type lithium manganese composite oxide (LiMn₂O₄) was prepared as another positive electrode active material.

The NMC composite oxide and the spinel type lithium manganese composite oxide were prepared such that the ratio of the NMC composite oxide was 70% by mass with respect to the total mass of the NMC composite oxide and the spinel type lithium manganese composite oxide. Next, the NMC composite oxide and the spinel type lithium manganese composite oxide were prepared to have 90% by mass in total, and 5% by mass of carbon black (Super-P, manufactured by 3M) as the conductive aid and 5% by mass of polyvinylidene fluoride (PVDF) (manufactured by KUREHA CORPORATION, #7200) as the binder were prepared. A suitable amount of N-methyl-2-pyrrolidone (NMP) as the slurry viscosity adjusting solvent was mixed with those materials to prepare a positive electrode active material slurry. The obtained positive electrode active material slurry was applied to the front surface of an aluminum foil (thickness: 20 µm) as the current collector, dried at 120°C for 3 minutes, and then subjected to press molding using a roll press machine to produce a positive electrode active material layer having a rectangular planar shape. The positive electrode active material layer was also formed on the rear surface in the same manner to produce a positive electrode in which the positive electrode active material layers are formed on the both surfaces of the positive electrode current collector (aluminum foil) and the thickness of a portion other than the portion at end of the application is 150 µm. In this way, positive electrodes each having a different composition of the positive electrode active material as presented in the following Table 1 were produced (number is % by mass).

### (2) Production of negative electrode

95% by mass of artificial graphite as the negative electrode active material and 5% by mass of polyvinylidene fluoride (PVDF) (manufactured by KUREHA CORPORATION, #7200) as the binder were prepared. A suitable amount of N-methyl-2-pyrrolidone (NMP) as the slurry viscosity adjusting solvent was mixed with those materials to prepare a negative electrode active material slurry. The obtained negative electrode active material slurry was applied to the front surface of a copper foil (thickness: 10 µm) as the current collector, dried at 120°C for 3 minutes, and then subjected to press molding using a roll press machine to produce a negative electrode active material layer having a rectangular planar shape. The negative electrode active material layer was also formed on the rear surface in the same manner to produce a negative electrode in which the negative electrode active material layers are formed on the both surfaces of the negative electrode current collector (copper foil) and the thickness of a portion other than the portion at end of the application is 140 µm.

### (3) Production of electrolyte

LiPF₆ as the lithium salt was dissolved in a mixed solvent of ethylene carbonate (EC) and diethyl carbonate (DEC) (volume ratio EC : DEC of 1 : 1) to have 1.0 mol/L. To this solution, 1.0% by mass of 1,3-propane sultone (PS) as the compound having an S=O bond in a molecule and 1.0% by mass of each of vinylene carbonate (VC) and fluoroethylene carbonate (FEC) as other additives were added and dissolved, thereby producing an electrolyte.

### (4) Production of test cell

By alternately laminating, via a microporous film made of polyethylene as the separator (thickness: 25 µm), the positive electrode produced in the above (1) and the negative electrode produced in the above (2) (positive electrode 10 layers and negative electrode 11 layers), a power generating element was produced. The obtained power generating element was disposed in a bag made of an aluminum laminate sheet (thickness: 150 µm) as the outer casing, and the electrolyte solution produced in the above (3) was injected thereinto. Herein, the injection amount of the electrolyte solution was adjusted to the amount 1.40 times the total hole volume (calculated by calculation) of the positive electrode active material layer, the negative electrode active material layer, and the separator. Subsequently, under vacuum conditions, the opening of the aluminum laminate sheet bag was sealed such that the tab for taking out current, which is connected to both electrodes, was led to outside, and a test cell as a laminate type lithium ion secondary battery was completed.

### (5) Evaluation of capacity retention rate

In order to maintain in-plane uniformity, the produced test cell was fixed by interposing the test cell between stainless sheets having a thickness of 5 mm such that the pressure to be applied to the test cell became 100 g/m². 0.2 C/4 .2 V_CC/CV charge was performed using this test cell at 25°C for 7 hours. Next, after rest for 10 minutes, discharge was performed by 0.2 C_CC discharge up to 2.5 V. Thereafter, a cycle test was performed by repeating a cycle of 1 C/4 . 2 V_CC/CV charge (0.0015 C cut) and 1 C_CC discharge (2.5 V cut) under atmosphere at 55°C, and a value of the discharge capacity at 300th cycle with respect to the discharge capacity at the first cycle was calculated as the capacity retention rate. The obtained capacity retention rate of the test cell is presented in the following Table 1. Incidentally, the case of having a high capacity retention rate means that the case is excellent in cycle durability.

### (6) Measurement of rated capacity

The rated capacity was measured by newly preparing a test cell having the same configuration separately from the test cell which has been used in evaluation.

The rated capacity was measured in such a manner that an electrolyte solution was injected into the test cell and then left to stand for about 10 hours, and then initial charge and discharge was performed at a temperature of 25°C according to the following procedures. That is, the discharge capacity by the initial discharge of the following Procedure 2 is regarded as the rated capacity.

Procedure 1: Charge is performed for 12 hours at a constant-current/constant-voltage charge of 0.2 C/4.15 V, and rest for 10 minutes is carried out.

Procedure 2: After reaching 2.5 V at a constant-current discharge of 0.2 C, rest for 10 minutes is carried out.

The rated capacity (Ah) and the ratio of the battery area to the rated capacity of the obtained test cell of Example 1 were 4.5 (Ah) and 70 cm²/Ah, respectively.

### [Example 2]

A test cell was produced by the same method as in Example 1, except that the ratio of the NMC composite oxide was set to 50% by mass with respect to the total mass of the NMC composite oxide and the lithium nickel-based composite oxide, and the evaluation of the capacity retention rate and the measurement of the rated capacity were performed.

### [Example 3]

A test cell was produced by the same method as in Example 1, except that the concentration of 1,3-propane sultone (PS) was set to 0.4% by mass, and the evaluation of the capacity retention rate and the measurement of the rated capacity were performed.

### [Example 4]

A test cell was produced by the same method as in Example 1, except that the concentration of 1,3-propane sultone (PS) was set to 2.0% by mass, and the evaluation of the capacity retention rate and the measurement of the rated capacity were performed.

### [Example 5]

A test cell was produced by the same method as in Example 1, except that the concentration of 1,3-propane sultone (PS) was set to 1.2% by mass, and the evaluation of the capacity retention rate and the measurement of the rated capacity were performed.

### [Example 6]

An NMC composite oxide (LiNi_{0.30}Mn_{0.35}Co_{0.35}O₂) in which the content ratio of nickel contained in the transition metal atoms is 30% by atom in terms of composition ratio with respect to the total amount of the transition metal atoms other than lithium was prepared as the NMC composite oxide. A test cell was produced by the same method as in Example 1, except that this NMC composite oxide was used, and the evaluation of the capacity retention rate and the measurement of the rated capacity were performed.

### [Example 7]

An NMC composite oxide (LiNi_{0.90}Mn_{0.05}Co_{0.05}O₂) in which the content ratio of nickel contained in the transition metal atoms is 90% by atom in terms of composition ratio with respect to the total amount of the transition metal atoms other than lithium was prepared as the NMC composite oxide. A test cell was produced by the same method as in Example 1, except that this NMC composite oxide was used, and the evaluation of the capacity retention rate and the measurement of the rated capacity were performed.

### [Example 8]

A test cell was produced by the same method as in Example 1, except that 1,3-prop-1-ene sultone (PRS) was used instead of 1,3-propane sultone (PS) as the compound having an S=O bond in a molecule, and the evaluation of the capacity retention rate and the measurement of the rated capacity were performed.

### [Example 9]

A test cell was produced by the same method as in Example 1, except that methylene methanedisulfonate (MMDS) was used instead of 1,3-propane sultone (PS) as the compound having an S=O bond in a molecule, and the evaluation of the capacity retention rate and the measurement of the rated capacity were performed.

### [Comparative Example 1]

A test cell was produced by the same method as in Example 1, except that the ratio of the NMC composite oxide was set to 40% by mass with respect to the total mass of the NMC composite oxide and the lithium nickel-based composite oxide, and the evaluation of the capacity retention rate and the measurement of the rated capacity were performed.

### [Comparative Example 2]

A test cell was produced by the same method as in Example 1, except that the addition amount of 1,3-propane sultone (PS) as the compound having an S=O bond in a molecule was set to 0.2% by mass, and the evaluation of the capacity retention rate and the measurement of the rated capacity were performed.

### [Comparative Example 3]

A test cell was produced by the same method as in Example 1, except that the addition amount of 1,3-propane sultone (PS) as the compound having an S=O bond in a molecule was set to 2.2% by mass, and the evaluation of the capacity retention rate and the measurement of the rated capacity were performed.

The rated capacity (Ah) and the ratio of the battery area to the rated capacity of each of the obtained test cells of Examples 2 to 9 and Comparative Examples 1 to 3 all were 4.5 (Ah) and 70 cm²/Ah, respectively.

The evaluation of the capacity retention rates of Examples and Comparative Examples is presented in the following Table 1.

**[Table 1]**

| | Ratio of lithium nickel-based composite oxide (% by mass) | Ni ratio (% by atom) | Additive having an S=O bond in a molecule | | Capacity retention rate (%) |
|---|---|---|---|---|---|
| | | | Type | Concentration (% by mass) | |
| Example 1 | 70 | 50 | PS | 1.0 | 88 |
| Example 2 | 50 | 50 | PS | 1.0 | 85 |
| Example 3 | 70 | 50 | PS | 0.4 | 88 |
| Example 4 | 70 | 50 | PS | 2.0 | 85 |
| Example 5 | 70 | 50 | PS | 1.2 | 90 |
| Example 6 | 70 | 30 | PS | 1.0 | 90 |
| Example 7 | 70 | 90 | PS | 1.0 | 85 |
| Example 8 | 70 | 50 | PRS | 1.0 | 89 |
| Example 9 | 70 | 50 | MMDS | 1.0 | 87 |
| Comparative Example 1 | 40 | 50 | PS | 1.0 | 84 |
| Comparative Example 2 | 70 | 50 | PS | 0.2 | 83 |
| Comparative Example 3 | 70 | 50 | PS | 2.2 | 80 |

From the results presented in Table 1, it is confirmed that even in a case in which the positive electrode active material layer containing a lithium nickel-based composite oxide is used and a compound having an S=O bond in a molecule is added to the electrolyte, when the test cell has the configuration of the present invention, a high capacity retention rate is achieved (the cycle durability is improved).

Further, as understood from the rated capacity and the ratio of the battery area to the rated capacity, the test cells used in Examples and Comparative Examples are test cells with a large size, a large capacity, and a large area. According to this, it is confirmed that the effect of the present invention is not limited by the capacity and the size of the test cell, but the present invention is useful for electric devices with a large size, a large capacity, and a large area.

### Reference Signs List

10 and 50 Lithium ion secondary battery
11 Negative electrode current collector
12 Positive electrode current collector
13 Negative electrode active material layer
15 Positive electrode active material layer
17 Separator
19 Single battery layer
21 and 57 Power generating element
25 Negative electrode current collecting plate
27 Positive electrode current collecting plate
29 and 52 Battery outer casing material
58 Positive electrode tab
59 Negative electrode tab

## Claims

1. An electric device comprising:
a positive electrode which includes a positive electrode active material layer containing a lithium nickel-based composite oxide and a spinel type lithium manganese composite oxide; and
an electrolyte which contains a compound having an S=O bond in a molecule, wherein
a content ratio of the lithium nickel-based composite oxide in the positive electrode active material layer is 50% by mass or more with respect to the total mass of the lithium nickel-based composite oxide and the spinel type lithium manganese composite oxide, and
a concentration of the compound having an S=O bond in a molecule in the electrolyte is 0.4 to 2.0% by mass.

2. The electric device according to claim 1, wherein a value of ratio of a rated capacity to a battery area (a projection area of a battery including a battery outer casing) is 5 cm²/Ah or more, and the rated capacity is 3 Ah or more.

3. The electric device according to claim 1 or 2, wherein the lithium nickel-based composite oxide is a lithium transition metal composite oxide of a layered crystal structure containing nickel, manganese, and cobalt (an NMC composite oxide).

4. The electric device according to claim 3, wherein the NMC composite oxide has a composition represented by a general formula: LiₐNi_{b}Mn_{c}CO_{d}MₓO₂ (provided that, in the formula, a, b, c, d, and x satisfy 0.9 ≤ a ≤ 1.2, 0 < b < 1, 0 < c ≤ 0.5, 0 < d ≤ 0.5, 0.9 ≤ x 0.9 ≤ 0.3, and b + c + d = 1; and M is at least one kind selected from the group consisting of Ti, Zr, Nb, W, P, Al, Mg, V, Ca, Sr, and Cr) .

5. The electric device according to claim 3 or 4, wherein a content ratio of nickel contained in transition metal atoms other than lithium of the NMC composite oxide is 30 to 90% by atom in terms of composition ratio with respect to the total amount of the transition metal atoms other than lithium.

6. The electric device according to any one of claims 1 to 5, wherein a concentration of the compound having an S=O bond in a molecule in the electrolyte is 1.2 to 1.6% by mass.

7. The electric device according to any one of claims 1 to 6, wherein a content ratio of the lithium nickel-based composite oxide in the positive electrode active material layer is 70 to 90% by mass with respect to the total mass of the lithium nickel-based composite oxide and the spinel type lithium manganese composite oxide.

8. The electric device according to any one of claims 1 to 7, wherein the compound having an S=O bond in a molecule contains a cyclic sulfonate ester.

9. The electric device according to any one of claims 1 to 8, wherein the electrolyte further contains a cyclic carbonate derivative.

10. The electric device according to any one of claims 1 to 9, being a non-aqueous electrolyte secondary battery.

11. The electric device according to claim 10, wherein the non-aqueous electrolyte secondary battery is a lithium ion secondary battery.
